# EUROPÄISCHE PATENTSCHRIFT

(11) **EP 3 972 777 B1**
(45) Veröffentlichungstag und Bekanntmachung des Hinweises auf die Patenterteilung: **26.06.2024**
(21) Anmeldenummer: 20732495.5
(22) Anmeldetag: 19.05.2020
(51) Int. Cl.: B23P 15/00, B23P 15/14

(54) **VERFAHREN ZUR HERSTELLUNG UND BEARBEITUNG EINES ZYLINDERFÖRMIGEN HOHLKÖRPERS AUS ALUMINIUM ODER EINER ALUMINIUMLEGIERUNG SOWIE ZU DESSEN ANORDNUNG IN EINEM KRAFTFAHRZEUGGETRIEBE.**
METHOD FOR PRODUCING AND MACHINING A CYLINDRICAL HOLLOW BODY CONSISTING OF ALUMINIUM OR AN ALUMINIUM ALLOY AND FOR ARRANGING SAID HOLLOW BODY IN A MOTOR VEHICLE TRANSMISSION.
PROCÉDÉ DE FABRICATION ET D'USINAGE D'UN CORPS CREUX CYLINDRIQUE EN ALUMINIUM OU EN UN ALLIAGE D'ALUMINIUM AINSI QUE DE SON AGENCEMENT DANS UNE TRANSMISSION DE VÉHICULE À MOTEUR.

(30) Priorität: 20.05.2019 DE 102019207311
(43) Veröffentlichungstag der Anmeldung: 30.03.2022
(73) Patentinhaber: ZF Friedrichshafen AG, 88046 Friedrichshafen (DE)
(72) Erfinder: RUHL, Christian, 88046 Friedrichshafen (DE); BOEHM, Helmut, 66386 St. Ingbert (DE); BREHMER, Martin, 88069 Tettnang (DE)
(86) Internationale Anmeldenummer: PCT/EP2020/063981
(87) Internationale Veröffentlichungsnummer: WO 2020/234306

(56) Entgegenhaltungen:
- DE-A1-102015 203 033
- DE-A1-102016 219 306
- DE-B3-102011 056 942

## Beschreibung

Die vorliegende Erfindung betrifft ein Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe gemäß dem Oberbegriff von Anspruch 1.

Im Bereich des Automobilbaus ist es bekannt, aus Gründen der Gewichtsreduzierung eines Fahrzeugs und damit einhergehend einer Kraftstoffeinsparung sowie einer Reduzierung des CO₂-Ausstoßes zunehmend Bauteile aus Leichtbaumaterialien zu verwenden. Da derartige Bauteile dabei konventionelle Bauteile, beispielsweise aus Stahl hergestellte Bauteile ersetzen, müssen sie jedoch dieselben Anforderungen hinsichtlich ihrer mechanischen Belastbarkeit, ihrer Korrosionsbeständigkeit und idealerweise auch hinsichtlich ihrer Bearbeitbarkeit und ihrer Herstellungskosten erfüllen. Als gut geeignet erwiesen haben sich in diesem Zusammenhang vor allem unterschiedliche Aluminiumlegierungen, deren Eigenschaften sich durch die unterschiedlichen Legierungsbestandteile in einem bestimmten Rahmen gezielt einstellen lassen. Die aus den unterschiedlichen Aluminiumlegierungen hergestellten Bauteile werden dabei üblicherweise als Gussteile hergestellt, wobei an die geometrische Beschaffenheit der Bauteile und insbesondere an deren geometrische Präzision hohe Anforderungen gestellt werden. In der Regel ist deshalb eine spanende Nachbearbeitung der aus Aluminium oder einer Aluminiumlegierung gegossenen Bauteile erforderlich.

Aus der DE 10 2011 056 942 B3, die die Merkmale des Oberbegriffs des Anspruchs 1 offenbart, ist in diesem Zusammenhang ein Verfahren zur Herstellung eines dünnwandigen und zylinderförmigen Bauteils aus Aluminium oder aus einer Aluminiumlegierung bekannt. Das Bauteil wird dabei zunächst mittels Druckguss erzeugt. Anschließend wird das Bauteil im rohen Zustand zentrisch gespannt und seine Innenfläche sowie seine Außenfläche werden spanend überdreht. Vom Überdrehen ausgenommen ist lediglich derjenige Teilbereich, auf dem das Bauteil gespannt wird. Schließlich wird das Bauteil rotiert, um eine ggf. vorhandene Unwucht zu ermitteln. Zur Reduzierung bzw. Beseitigung der Unwucht wird das Bauteil dann mit Ausgleichsbohrungen versehen. Der während des Überdrehens unbearbeitet gebliebene Teilbereich dient gleichermaßen als Lagerfläche zum Spannen des Bauteils während des Überdrehens bzw. während des Wuchtens als auch als Lagerfläche zum Einbau des Bauteils in eine Baugruppe.

Die DE 10 2015 203 033 A1 beschreibt ebenfalls ein Verfahren zur Herstellung eines dünnwandigen rotationssymmetrischen Bauteils aus Aluminium oder einer Aluminiumlegierung im Druckgussverfahren, welches Ausnehmungen in seiner Mantelfläche aufweist und welches auf seinen inneren und/oder äußeren Mantelflächen fertig bearbeitet wird. Das Druckgussverfahren arbeitet mit einer doppelten Gusskavität. Der Mantel wird zunächst ohne Ausnehmungen hergestellt und die Ausnehmungen werden anschließend über Schneiden in den Mantel eingebracht.

Aus der DE 10 2016 219 306 A1 ist ein Verfahren zum Fügen eines ersten metallischen Fügepartners mit einem zweiten metallischen Fügepartner mittels elektromagnetischen Pulsschweißens bekannt. Vor dem Fügen wird eine Duktilität des ersten Fügepartners thermisch erhöht.

Das aus der DE 10 2011 056 942 B3 bekannte Herstellungsverfahren ist jedoch dahingehend nachteilbehaftet, als dass sich als Lagerflächen für den Einbau in eine komplexere Baugruppe, beispielsweise ein Getriebe, am besten die Zahnflanken einer Verzahnung eignen, da über diese zuverlässig ein Drehmoment übertragen werden kann. Ein Spannen auf die Zahnflanken für den Wuchtvorgang hingegen ist vergleichsweise aufwändig.

Es ist eine Aufgabe der Erfindung, ein verbessertes Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe vorzuschlagen.

Diese Aufgabe wird erfindungsgemäß durch das Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe, wobei die Herstellung des Hohlkörpers mittels eines Gussprozesses derart erfolgt, dass der Hohlkörper eine innere und eine äußere Mantelfläche aufweist und in mindestens einem Teilbereich der inneren Mantelfläche eine Innenverzahnung aufweist, wobei der Hohlkörper für die Bearbeitung zentrisch gespannt wird und wobei die Anordnung des Hohlkörpers im Fahrzeuggetriebe ausschließlich über Zahnflanken der Innenverzahnung erfolgt. Das erfindungsgemäße Verfahren zeichnet sich dadurch aus, dass der Hohlkörper ausschließlich auf einen Kopfkreisdurchmesser der Innenverzahnung zentrisch gespannt wird.

Erfindungsgemäß ist es also vorgesehen, dass zunächst ein zylinderförmiger Hohlkörper mittels eines bekannten Gussprozesses entweder aus Aluminium oder aus einer Aluminiumlegierung gegossen wird. Die Festlegung auf einen spezifischen Gussprozess ist erfindungsgemäß nicht notwendig, solange der Gussprozess prinzipiell für das Gießen von Hohlkörpern aus Aluminium oder aus einer Aluminiumlegierung geeignet ist. Da es sich um einen zylinderförmigen Hohlkörper handelt, weist dieser einen runden Querschnitt sowie eine innere und eine äußere Mantelfläche auf. In mindestens einem - bevorzugt ringförmig - umlaufenden Teilbereich der inneren Mantelfläche ist zudem eine Innenverzahnung vorgesehen. Der zylinderförmige Hohlkörper ist bevorzugt rohrartig ausgebildet, weist bevorzugt also zwei offene Axialenden auf, über die beispielsweise auch auf einfache Weise eine Bearbeitung der inneren Mantelfläche möglich ist. Sowohl die innere als auch die äußere Mantelfläche können vorteilhaft Oberflächenkonturen z.B. in der Form von umlaufenden Nuten, aufgesetzten, umlaufenden Kragen, Kerben, Sicken, Bohrungen oder ähnliches aufweisen. Um eine auf die Herstellung folgende Bearbeitung des Hohlkörpers zu vereinfachen, ist es vorgesehen, den Hohlkörper zentrisch zu spannen. Zu diesem Zweck sind im Stand der Technik Spannvorrichtungen bekannt, die ein zentrisches Spannen eines zylinderförmigen Hohlkörpers aus Aluminium oder aus einer Aluminiumlegierung ermöglichen. Das zentrische Spannen erfolgt dabei erfindungsgemäß ausschließlich auf den Kopfkreisdurchmesser der Verzahnung, d.h., dass Spannbacken oder Spannfinger der Spannvorrichtung die Fläche auf den Zahnköpfen der Innenverzahnung als Lagerfläche zum Spannen des Hohlkörpers verwenden. Dadurch ergibt sich eine gleichmäßige, radial nach außen wirkende Spannkraft, welche eine unerwünschte Deformation des Hohlkörpers vermeidet. Zudem ergibt sich insbesondere gegenüber der DE 10 2011 056 942 B3 der Vorteil, dass der Spannvorgang zu einer zuverlässig reproduzierbaren Ausrichtung des Hohlkörpers führt. Die sich anschließende Bearbeitung kann dabei unterschiedliche Formen und Ausmaße aufweisen, beispielsweise ist es denkbar, dass der Hohlkörper nur poliert wird. Ebenso ist aber auch eine vergleichsweise aufwändige Bearbeitung, beispielsweise eine spanende Bearbeitung denkbar. Die Anordnung des Hohlkörpers im Fahrzeuggetriebe erfolgt dann ausschließlich über die Zahnflanken der Innenverzahnung, welche flächig an entsprechend ausgebildeten Flanken einer Gegenverzahnung im Fahrzeuggetriebe anliegen. Eine Übertragung von Drehmomenten erfolgt dementsprechend über die Flanken der Innenverzahnung und die Flanken der Gegenverzahnung. Der Hohlkörper kann z.B. die Funktion einer Hohlwelle im Fahrzeuggetriebe übernehmen.

Indem der Hohlkörper für die Bearbeitung ausschließlich auf einen Kopfkreisdurchmesser der Verzahnung zentrisch gespannt wird und die Anordnung des Hohlkörpers im Fahrzeuggetriebe ausschließlich über die Zahnflanken der Innenverzahnung erfolgt, werden für die Bearbeitung und die Anordnung des Hohlkörpers also unterschiedliche Flächen der Innenverzahnung herangezogen. Das führt zu dem Vorteil, dass sowohl für das Spannen im Rahmen der Bearbeitung als auch für die Anordnung des Hohlkörpers die jeweils am besten geeigneten Bereiche des Hohlkörpers herangezogen werden können. Da sowohl die Zahnflanken als auch die Zahnköpfe Bestandteile derselben Innenverzahnung sind und im selben Verfahrensschritt, nämlich dem Gussprozess, gemeinsam hergestellt werden, sind beide weitestgehend präzise zueinander ausgerichtet, so dass sich beim Spannen während der Bearbeitung und bei der Anordnung im Fahrzeuggetriebe keine unterschiedlichen Rotationsachsen für den Hohlkörper ergeben.

Gemäß einer bevorzugten Ausführungsform der Erfindung ist es vorgesehen, dass der Gussprozess als Druckgussprozess erfolgt. Dabei wird bevorzugt zunächst das Aluminium bzw. die Aluminiumlegierung in flüssiger Form in eine entsprechende Füllkammer einer Gießvorrichtung gefüllt, wobei die Füllkammer durch eine Druckbeaufschlagung des Aluminiums bzw. der Aluminiumlegierung mittels eines Gießkolbens unter Druck befüllt wird. Die Druckbeaufschlagung bleibt vorteilhaft bestehen, bis das Aluminium bzw. die Aluminiumlegierung erstarrt ist. Dadurch lassen sich vergleichsweise präzise geometrische Formen mit nur geringem Ausschuss erzeugen.

Gemäß einer weiteren bevorzugten Ausführungsform der Erfindung ist es vorgesehen, dass die innere und/oder die äußere Mantelfläche im Rahmen der Bearbeitung des Hohlkörpers überdreht werden, wobei jedoch der mindestens eine Teilbereich unüberdreht bleibt. Bevorzugt bleibt der mindestens eine Teilbereich nicht nur unüberdreht sondern spanend völlig unbearbeitet. Daraus ergibt sich der Vorteil, dass die Geometrie des gegossenen Hohlkörpers soweit erforderlich spanend nachgearbeitet wird, so dass sich eine äußerst präzise Formgebung realisieren lässt. Die mittels spanender Bearbeitung erreichbare geometrische Präzision ist dabei in der Regel höher als die mittels eines Gussprozesses erreichbare geometrische Präzision. Da der Hohlkörper zur Verwendung in einem Fahrzeuggetriebe und dort insbesondere zur Übertragung von Drehmomenten bzw. Drehzahlen gedacht ist, sind gute Rundlaufeigenschaften und somit eine hohe geometrische Präzision wichtige Voraussetzungen. Der die Innenverzahnung aufweisende Teilbereich wird dabei schon deswegen nicht überdreht, da der Hohlkörper hier im Bereich des Kopfkreises gespannt ist und dieser Teilbereich also nicht zugänglich ist für ein Drehwerkzeug. Ein anschließendes Umspannen auf einen anderen Bereich der Oberfläche des Hohlkörpers und damit verbunden ein Überdrehen der Zahnköpfe der Innenverzahnung im Teilbereich wäre zwar möglich, würde jedoch zusätzlichen Aufwand und damit zusätzliche Kosten verursachen und soll dementsprechend vermieden werden. Zudem könnte ein Umspannen auf einen anderen Bereich der Oberfläche des Hohlkörpers sowie ein damit verbundenes Überdrehen der Zahnköpfe der Innenverzahnung dazu führen, dass der Hohlkörper als solcher eine anderen Rotationsachse aufweist als der Kopfkreis der Innenverzahnung, was wiederum die Rundlaufeigenschaften im Fahrzeuggetriebe nachteilig beeinflussen würde.

Gemäß einer weiteren bevorzugten Ausführungsform der Erfindung ist es vorgesehen, dass der Hohlkörper im Rahmen der Bearbeitung gewuchtet wird. Das Wuchten im Sinne der Erfindung umfasst dabei gleichermaßen das Ermitteln von Unwuchten sowie deren Beseitigung. Die Beseitigung der Unwuchten muss nicht zwingend vollständig sein, aber zumindest soweit gehen, dass eine vorgegebene maximal zulässige Unwucht nicht mehr überschritten wird. Durch das Wuchten lassen sich somit sehr gute Gleichlaufeigenschaften des Hohlkörpers erzielen, was wiederum zu einer geringeren Geräuschemission und einer längeren Lebensdauer des Fahrzeuggetriebes beiträgt, in welchem der Hohlkörper angeordnet wird. Das Wuchten erfolgt dabei bevorzugt spanend, indem ein Materialabtrag gezielt an den Stellen des Hohlkörpers erfolgt, die zu der jeweils festgestellten Unwucht führen. Der Materialabtrag wiederum erfolgt bevorzugt durch das Bohren von größer oder kleiner dimensionierten Öffnungen durch die Mantelflächen des Hohlkörpers, wobei ein Durchmesser der jeweils angebrachten Bohröffnung abhängig von einer Stärke der festgestellten Unwucht sein kann. Diese Bohröffnungen dienen entsprechend als Wuchtbohrungen. Die die Unwuchten werden bevorzugt mittels einer hierzu geeigneten, an sich bekannten Vorrichtung zum Ermitteln der Unwuchten ermittelt. Da das Wuchten im Rahmen der Bearbeitung erfolgt, ist der Hohlkörper hierbei auf den Kopfkreisdurchmesser der Innenverzahnung gespannt.

Gemäß einer weiteren bevorzugten Ausführungsform der Erfindung ist es vorgesehen, dass die Herstellung des Hohlkörpers derart an das Fahrzeuggetriebe angepasst erfolgt, dass der Kopfkreisdurchmesser nach der Anordnung des Hohlkörpers im Fahrzeuggetriebe kontaktfrei bleibt. Das bedeutet also, dass die Zahnkopfflächen der Innenverzahnung nicht in Kontakt bzw. in Anlage sind mit Kontaktstellen oder Anlageflächen irgendeines Elements des Fahrzeuggetriebes. Im Gegenteil dienen die Zahnkopfflächen der Innenverzahnung ausschließlich zum zentrischen Spannen des Hohlkörpers während der Bearbeitung des Hohlkörpers. Daraus ergibt sich der Vorteil, dass zur Übertragung von Drehmomenten ausschließlich die hierzu geeigneten Flanken der Innenverzahnung verwendet werden. Der Kopfkreisdurchmesser der Innenverzahnung dient somit nicht zur Übertragung von Drehmomenten im Fahrzeuggetriebe und muss dementsprechend keine hierfür benötigten Eigenschaften aufweisen. Im Gegenteil dient der Kopfkreisdurchmesser der Innenverzahnung ausschließlich zum Spannen während der Bearbeitung des Hohlkörpers.

Gemäß einer weiteren bevorzugten Ausführungsform der Erfindung ist es vorgesehen, dass die Herstellung des Hohlkörpers derart erfolgt, dass der Hohlkörper in zwei Teilbereichen der inneren Mantelfläche jeweils eine Innenverzahnung aufweist. Daraus ergibt sich der Vorteil, dass der Hohlkörper vorteilhaft zur Übertragung von Drehmomenten im Fahrzeuggetriebe verwendet werden kann. Eine erste Innenverzahnung dient dabei als Eingang für das zu übertragende Drehmoment während eine zweite Innenverzahnung als Ausgang für das zu übertragende Drehmoment dient.

Gemäß einer weiteren bevorzugten Ausführungsform der Erfindung ist es vorgesehen, dass im Rahmen der Bearbeitung des Hohlkörpers der Hohlkörper entgratet und/oder gebürstet und/oder gewaschen wird. Das Bürsten bzw. Waschen des Hohlkörpers kann dabei sowohl vor dem Wuchten als auch nach dem Wuchten erfolgen. Das Entgraten findet hingegen bevorzugt ausschließlich nach dem Wuchten statt, da somit vorteilhaft alle Grate entfernt werden können, auch diese, welche durch ggf. angebrachte Wuchtbohrungen entstanden sind. Dadurch kann gewährleistet werden, dass evtl. vorhandene Materialpartikel bzw. Grate nicht in das Fahrzeuggetriebe gelangen und den Wirkungsgrad des Fahrzeuggetriebes nachteilig beeinflussen.

Nachfolgend wird die Erfindung anhand von in den Figuren dargestellten Ausführungsformen beispielhaft erläutert.

Es zeigen:
- Fig. 1: beispielhaft eine mögliche Ausführungsform eines erfindungsgemäßen Verfahrens zur Herstellung und Bearbeitung eines zylinderförmigen Hohlkörpers aus Aluminium oder einer Aluminiumlegierung sowie zu dessen Anordnung in einem Kraftfahrzeuggetriebe,
- Fig. 2: beispielhaft eine mögliche Ausbildungsform eines erfindungsgemäß hergestellten zylindrischen Hohlkörpers und
- Fig. 3: beispielhaft und schematisch einen Ausschnitt eines erfindungsgemäß hergestellten Hohlkörpers nach seiner Anordnung in einem Fahrzeuggetriebe.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

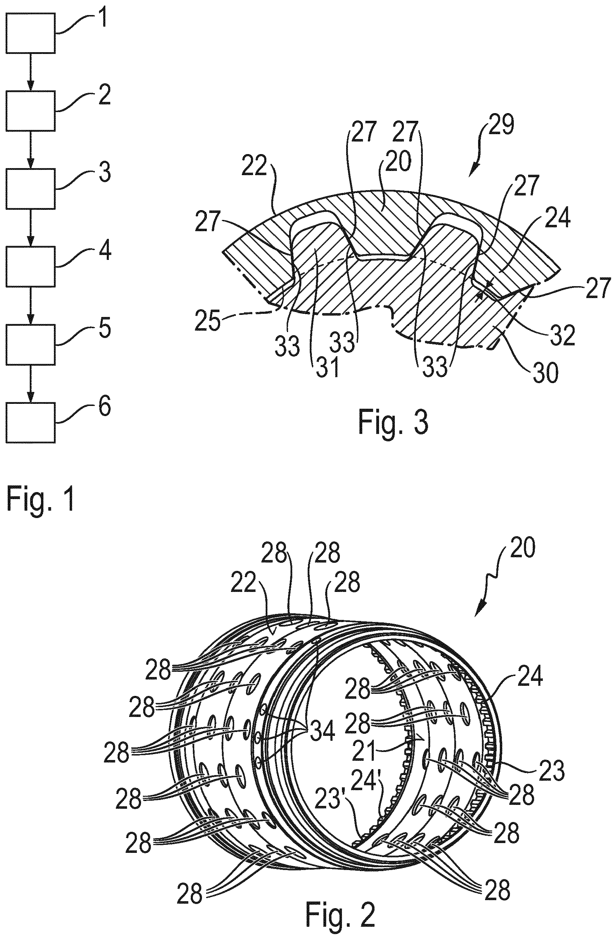

Fig. 1 zeigt beispielhaft eine mögliche Ausführungsform eines erfindungsgemäßen Verfahrens zur Herstellung und Bearbeitung eines zylinderförmigen Hohlkörpers 20 aus Aluminium oder einer Aluminiumlegierung sowie zu dessen Anordnung in einem Kraftfahrzeuggetriebe 29. Dabei erfolgt in Verfahrensschritt 1 zunächst die Herstellung des Hohlkörpers 20 mittels eines Gussprozesses, beispielsgemäß mittels eines Druckgussprozesses. Die Herstellung erfolgt nach Maßgabe eines verwendeten Gießwerkzeugs bzw. nach Maßgabe einer Füllkammer des Gießwerkzeugs derart, dass der Hohlkörper 20 eine innere und eine äußere Mantelfläche 21, 22 aufweist und beispielsgemäße in zwei Teilbereichen 23 und 23' der inneren Mantelfläche 21 jeweils eine Innenverzahnung 24 und 24' aufweist. Außerdem erfolgt die Herstellung des Hohlkörpers 20 in Schritt 1 derart an das Fahrzeuggetriebe 29 angepasst, dass ein Kopfkreisdurchmesser 25 der Innenverzahnungen 24 und 24 nach der Anordnung des Hohlkörpers 20 im Fahrzeuggetriebe 29 kontaktfrei bleibt. Für eine Bearbeitung des Hohlkörpers 20 wird der Hohlkörper 20 dann in Schritt 2 zentrisch gespannt. Das zentrische Spannen erfolgt dabei ausschließlich auf den unüberdrehten bzw. nicht spanend bearbeiteten Kopfkreisdurchmessern 25 und 25' der Innenverzahnungen 24 und 24'. In Verfahrensschritt 3 werden im Rahmen der Bearbeitung des Hohlkörpers 20 sowohl die innere Mantelfläche 21 als auch die äußere Mantelfläche 22 überdreht. Die Teilbereiche 23 und 23', die die Innenverzahnungen 24 und 24' aufweisen, bleiben dabei jedoch unüberdreht bzw. spanend unbearbeitet, da der Hohlkörper 20 hier jeweils im Bereich des Kopfkreisdurchmessers 25 gespannt ist. Das Überdrehen der inneren und äußeren Mantelflächen 21, 22 erfolgt beispielsgemäß mittels einer hierzu ausgebildeten Drehvorrichtung. Im folgenden Verfahrensschritt 4 wird der Hohlkörper 20 erneut jeweils auf den Kopfkreisdurchmesser 25 der Innenverzahnungen 24 und 24' gespannt und gewuchtet. Im Rahmen des Wuchtens werden zunächst die Unwuchten des Hohlkörpers 20 ermittelt, was mittels einer hierzu ausgebildeten Vorrichtung zum Ermitteln von Unwuchten erfolgt. Sofern hierbei eine unzulässige Unwucht erkannt wird, wird im Rahmen des Wuchtens überschüssiges Material am Hohlkörper 20, welches den Rundlauffehler verursacht, entfernt. Das Entfernen des überschüssigen Materials erfolgt beispielsgemäß durch das Setzen von Wuchtbohrungen 34 durch die innere und äußere Mantelfläche 21, 22. In einem folgenden Verfahrensschritt 5 wird der Hohlkörper 20 entgratet, gebürstet und gewaschen, um ggf. vorhandene Grate und Verunreinigungen zu entfernen. In Verfahrensschritt 6 schließlich wird der Hohlkörper 20 im Fahrzeuggetriebe 29 angeordnet, wobei die Anordnung ausschließlich über Zahnflanken 27 der Innenverzahnungen 24 und 24' erfolgt. Insbesondere zwischen den Zahnkopfflächen am Kopfkreisdurchmesser 25 der Innenverzahnungen 24 und 24' sowie den Anlageflächen bzw. Kontaktstellen weiterer Elemente 30 des Fahrzeuggetriebes 29 besteht dabei ein Luftspalt 32, die Zahnkopfflächen am Kopfkreisdurchmesser 25 der Innenverzahnungen 24 und 24' bleiben also kontaktfrei. Nur dadurch bleibt stets gewährleistet, dass die Drehmomentübertragung ausschließlich über die Zahnflanken 27 der Innenverzahnung 24 bzw. 24' erfolgt.

Fig. 2 zeigt beispielhaft eine mögliche Ausbildungsform eines erfindungsgemäß hergestellten zylindrischen Hohlkörpers 20. Der dargestellte Hohlkörper 20 besteht aus einer Aluminiumlegierung, beispielsgemäß aus AISi9Cu3(Fe), und wurde mittels eines Druckgussprozesses hergestellt. Er weist eine innere Mantelfläche 21 und eine äußere Mantelfläche 22 auf, die beide im Rahmen einer Bearbeitung des Hohlkörpers 20 überdreht wurden. Lediglich ein erster Teilbereich 23 und ein zweiter Teilbereich 23', die auch jeweils eine Innenverzahnung 24, 24' aufweisen, sind unüberdreht bzw. spanend unbearbeitet geblieben, also noch im Rohzustand. Die Innenverzahnungen 24, 24' wurden dabei bereits während des Gussprozesses hergestellt. Weiterhin zu sehen ist, dass der Hohlkörper 20 eine Vielzahl von Bohrungen 28 aufweist. Die Bohrungen 28 weisen dabei unterschiedliche Durchmesser auf und dienen einerseits der Gewichtsreduzierung des Hohlkörpers 20 wie auch dem Ölabfluss aus dem Hohlkörper 20 bei einer Verwendung des Hohlkörpers 20 im Fahrzeuggetriebe 29. Zusätzlich zu sehen sind Wuchtbohrungen 34, die vornehmlich möglichst nahe jedes Teilbereichs 23, 23' bzw. jeder Innenverzahnung 24, 24' des Hohlköpers 20 angeordnet sind. Die Wuchtbohrungen 34 können je nach benötigtem Materialabtrag unterschiedliche Durchmesser aufweisen und dienen zur Verbesserung der insbesondere akustischen Rundlaufeigenschaften des Hohlkörpers 20 im Fahrzeuggetriebe 29. Darüber hinaus tragen Wuchtbohrungen 34 aber auch zur weiteren Gewichtsreduzierung des Hohlkörpers 20 und zum nochmals verbesserten Ölabfluss aus dem Hohlkörper 20 bei.

Fig. 3 zeigt beispielhaft und schematisch einen Ausschnitt eines erfindungsgemäß hergestellten Hohlkörpers 20 nach seiner Anordnung in einem Fahrzeuggetriebe 29. Auch das Fahrzeuggetriebe 29 ist dabei nur ausschnittsweise und in Form des Hohlkörpers 20 sowie der Zahnscheibe 30 dargestellt. Wie zu sehen ist, weist der Hohlkörper 20 im dargestellten Teilbereich 23 eine Innenverzahnung 24 auf, welche in Eingriff mit einer Gegenverzahnung 31 der Zahnscheibe 30 steht. Die Innenverzahnung 24 wirkt mit der Gegenverzahnung 31 Zahnscheibe 30 als Steckverzahnung zur Gewährleistung einer drehfesten Verbindung. Der Teilbereich 23 ist dabei der inneren Mantelfläche 21 zugeordnet. Der Hohlkörper 20 weist auch eine äußere Mantelfläche 22 auf. Die Innenverzahnung 24 weist einen Kopfkreisdurchmesser 25 (dargestellt durch eine gestrichelte Linie) auf, welcher ausschließlich zum Spannen während einer Bearbeitung des Hohlkörpers 20 dient. Nach der Anordnung des Hohlkörpers 20 im Fahrzeuggetriebe 29 hat der Kopfkreisdurchmesser 25 bzw. haben die Zahnkopfflächen des Kopfkreisdurchmessers 25 der Innenverzahnung 24 keine Funktion mehr. Entsprechend bleibt der Kopfkreisdurchmesser 25 kontaktfrei, so dass ein Luftspalt 32 zwischen den Flächen der Innenverzahnung 24 im Bereich des Kopfkreisdurchmessers 25 und der der Zahnscheibe 30 besteht. Zahnflanken 27 der Innenverzahnung 24 des Hohlkörpers 20 hingegen liegen an Gegenflanken 33 der der Zahnscheibe 30 an. Diese Kontaktflächen der Zahnflanken 27 der Innenverzahnung 24 und der Gegenflanken 33 der der Zahnscheibe 30 dienen der Übertragung von Drehmomenten. Eine Funktion während der Bearbeitung des Hohlrads 20 kommt den Zahnflanken 27 hingegen nicht zu.

### Bezugszeichen

- 1: Herstellung des Hohlkörpers
- 2: zentrisches Spannen
- 3: Überdrehen der inneren und äußeren Mantelfläche
- 4: Wuchten
- 5: Entgraten, Bürsten und Waschen
- 6: Anordnung im Fahrzeuggetriebe
- 20: Hohlkörper
- 21: innere Mantelfläche
- 22: äußere Mantelfläche
- 23, 23': Teilbereich mit Innenverzahnung
- 24, 24`: Innenverzahnung
- 25: Kopfkreisdurchmesser
- 27: Zahnflanken der Innenverzahnung
- 28: Bohrung
- 29: Fahrzeuggetriebe
- 30: Zahnscheibe
- 31: Gegenverzahnung
- 32: Luftspalt
- 33: Gegenflanken
- 34: Wuchtbohrung
- α: Winkel

## Patentansprüche

1. Verfahren zur Herstellung und Bearbeitung eines zylinderförmigen Hohlkörpers (20) aus Aluminium oder einer Aluminiumlegierung sowie zu dessen Anordnung in einem Kraftfahrzeuggetriebe (29), wobei die Herstellung des Hohlkörpers (20) mittels eines Gussprozesses (1) derart erfolgt, dass der Hohlkörper (20) eine innere und eine äußere Mantelfläche (21, 22) aufweist und in mindestens einem Teilbereich (23, 23') der inneren Mantelfläche (21) eine Innenverzahnung (24) aufweist, wobei der Hohlkörper (20) für die Bearbeitung zentrisch gespannt wird (2) und wobei die Anordnung des Hohlkörpers (20) im Fahrzeuggetriebe (29) ausschließlich über Zahnflanken (27) der Innenverzahnung (24) erfolgt (6),
**dadurch gekennzeichnet, dass** der Hohlkörper (20) ausschließlich auf einen Kopfkreisdurchmesser (25) der Innenverzahnung (24, 24') zentrisch gespannt wird (2).

2. Verfahren nach Anspruch 1,
**dadurch gekennzeichnet, dass** der Gussprozess als Druckgussprozess erfolgt.

3. Verfahren nach mindestens einem der Ansprüche 1 und 2,
**dadurch gekennzeichnet, dass** die innere und/oder die äußere Mantelfläche (21, 22) im Rahmen der Bearbeitung des Hohlkörpers (20) überdreht werden (3), wobei jedoch der mindestens eine Teilbereich (23, 23') unüberdreht bleibt.

4. Verfahren nach mindestens einem der Ansprüche 1 bis 3,
**dadurch gekennzeichnet, dass** der Hohlkörper (20) im Rahmen der Bearbeitung gewuchtet wird (4).

5. Verfahren nach mindestens einem der Ansprüche 1 bis 4,
**dadurch gekennzeichnet, dass** die Herstellung des Hohlkörpers (20) derart an das Fahrzeuggetriebe (29) angepasst erfolgt (1), dass der Kopfkreisdurchmesser (25) nach der Anordnung des Hohlkörpers (20) im Fahrzeuggetriebe (29, 6) kontaktfrei bleibt.

6. Verfahren nach mindestens einem der Ansprüche 1 bis 5,
**dadurch gekennzeichnet, dass** die Herstellung des Hohlkörpers (20) derart erfolgt (1), dass der Hohlkörper (20) in zwei Teilbereichen (23, 23') der inneren Mantelfläche (21) jeweils eine Innenverzahnung (24) aufweist.

7. Verfahren nach mindestens einem der Ansprüche 1 bis 6,
**dadurch gekennzeichnet, dass** im Rahmen der Bearbeitung des Hohlkörpers (20) der Hohlkörper (20) entgratet und/oder gebürstet und/oder gewaschen wird (5).

## Claims

1. Method for producing and machining a cylindrical hollow body (20) consisting of aluminium or an aluminium alloy and for arranging said hollow body in a motor vehicle transmission (29), wherein the hollow body (20) is produced by means of a casting process (1) in such a way that the hollow body (20) has an inner and an outer lateral surface (21, 22) and has an internal tooth system (24) in at least one subregion (23, 23') of the inner lateral surface (21), wherein, for machining, the hollow body (20) is centrally clamped (2), and wherein the hollow body (20) is arranged (6) in the vehicle transmission (29) exclusively by means of tooth flanks (27) of the internal tooth system (24),
**characterized in that** the hollow body (20) is clamped (2) centrally exclusively on a tip circle diameter (25) of the internal tooth system (24, 24').

2. Method according to Claim 1,
**characterized in that** the casting process is carried out as a diecasting process.

3. Method according to either of Claims 1 and 2,
**characterized in that** the inner and/or the outer lateral surface (21, 22) are/is finish-turned (3) as part of the machining of the hollow body (20), but the at least one subregion (23, 23') remains un-finish-turned.

4. Method according to at least one of Claims 1 to 3,
**characterized in that** the hollow body (20) is balanced (4) as part of the machining process.

5. Method according to at least one of Claims 1 to 4,
**characterized in that** the production of the hollow body (20) takes place (1) in a manner adapted to the vehicle transmission (29) in such a way that the tip circle diameter (25) remains contact-free after the hollow body (20) has been arranged in the vehicle transmission (29, 6).

6. method according to at least one of Claims 1 to 5,
**characterized in that** the production of the hollow body (20) takes place (1) in such a way that the hollow body (20) has an internal tooth system (24) in each of two subregions (23, 23') of the inner lateral surface (21).

7. Method according to at least one of Claims 1 to 6,
**characterized in that** the hollow body (20) is deburred and/or brushed and/or washed (5) as part of the machining of the hollow body (20).

## Revendications

1. Procédé pour la fabrication et l'usinage d'un corps creux (20) de forme cylindrique en aluminium ou en un alliage d'aluminium ainsi que pour son agencement dans une transmission de véhicule automobile (29), la fabrication du corps creux (20) s'effectuant au moyen d'un processus de coulée (1) de telle sorte que le corps creux (20) présente une surface d'enveloppe intérieure et une surface d'enveloppe extérieure (21, 22) et présente dans au moins une zone partielle (23, 23') de la surface d'enveloppe intérieure (21) une denture intérieure (24), le corps creux (20) étant serré de manière centrée (2) pour l'usinage, et l'agencement du corps creux (20) dans la transmission de véhicule (29) s'effectuant (6) exclusivement par l'intermédiaire de flancs de dents (27) de la denture intérieure (24),
**caractérisé en ce que** le corps creux (20) est serré de manière centrée (2) exclusivement sur un diamètre de cercle de tête (25) de la denture intérieure (24, 24').

2. Procédé selon la revendication 1, **caractérisé en ce que** le processus de coulée est un processus de coulée sous pression.

3. Procédé selon au moins l'une quelconque des revendications 1 et 2, **caractérisé en ce que** la surface d'enveloppe intérieure et/ou la surface d'enveloppe extérieure (21, 22) sont usinées par tournage (3) dans le cadre de l'usinage du corps creux (20), l'au moins une zone partielle (23, 23') restant toutefois non usinée par tournage.

4. Procédé selon au moins l'une quelconque des revendications 1 à 3, **caractérisé en ce que** le corps creux (20) est équilibré (4) dans le cadre de l'usinage.

5. Procédé selon au moins l'une quelconque des revendications 1 à 4, **caractérisé en ce que** la fabrication du corps creux (20) s'effectue de manière adaptée (1) à la transmission de véhicule (29) de telle sorte que le diamètre de cercle de tête (25) reste sans contact après l'agencement du corps creux (20) dans la transmission de véhicule (29, 6).

6. Procédé selon au moins l'une quelconque des revendications 1 à 5, **caractérisé en ce que** la fabrication du corps creux (20) s'effectue (1) de telle sorte que le corps creux (20) présente une denture intérieure (24) dans deux zones partielles (23, 23') de la surface d'enveloppe intérieure (21).

7. Procédé selon au moins l'une quelconque des revendications 1 à 6, **caractérisé en ce que**, dans le cadre de l'usinage du corps creux (20), le corps creux (20) est ébavuré et/ou brossé et/ou lavé (5).
